(19) Europäisches Patentamt European Patent Office Office européen des brevets

(11) **EP 4 032 351 B1**

(12) **EUROPEAN PATENT SPECIFICATION**

(45) Date of publication and mention of the grant of the patent:
**25.12.2024 Bulletin 2024/52**

(21) Application number: **19770030.5**

(22) Date of filing: **16.09.2019**

(51) International Patent Classification (IPC):
**H04W 72/044** *(2023.01)*     **H04B 7/06** *(2006.01)*
**H04W 74/0808** *(2024.01)*

(52) Cooperative Patent Classification (CPC):
**H04W 72/046; H04B 7/0695; H04W 74/0808**

(86) International application number:
**PCT/EP2019/074639**

(87) International publication number:
**WO 2021/052555 (25.03.2021 Gazette 2021/12)**

(54) **TRANSMISSION BEAM SELECTION**

ÜBERTRAGUNGSSTRAHLAUSWAHL

SÉLECTION DE FAISCEAU DE TRANSMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.07.2022 Bulletin 2022/30**

(73) Proprietor: **Telefonaktiebolaget LM Ericsson (publ)**
**164 83 Stockholm (SE)**

(72) Inventors:
• **VIERA, Joao**
**245 63 Hjärup (SE)**

• **WILHELMSSON, Leif**
**222 20 Lund (SE)**
• **MALEKI, Sina**
**214 22 Malmö (SE)**

(74) Representative: **Ericsson**
**Patent Development**
**Torshamnsgatan 21-23**
**164 80 Stockholm (SE)**

(56) References cited:
**US-A1- 2019 021 092     US-A1- 2019 230 706**

## Description

## TECHNICAL FIELD

The present disclosure relates generally to the field of wireless communication. More particularly, it relates to selection of transmission beams in a wireless communication environment requiring clear channel assessment (CCA) before transmission.

## BACKGROUND

While cellular systems are traditionally designed for use of licensed spectra, use of unlicensed spectra - on its own or in combination with licensed spectra - is now considered for cellular systems (e.g., to boost performance, such as overall throughput).

For a transmitter node to be allowed to transmit in an unlicensed spectrum, it is typically required that the transmitter node first performs a successful clear channel assessment (CCA) procedure.

A CCA procedure typically comprises the transmitter node sensing the channel medium, and determining whether it is idle for a specific number of time intervals. After sensing the medium to be idle for the specific number of time intervals, the transmitter node is typically allowed to transmit for a certain amount of time; sometimes referred to as a maximum channel occupancy time (MCOT). The length of the MCOT depends on regulation and on the type of CCA that has been performed; but it may typically range from 1ms to 10ms.

US 2019/0230706 A1 and US 2019/0021092 A1 describe example implementations of Listen Before Talk (LBT) procedures.

If a transmitter node is equipped with an array of antennas, some regulations - e.g., the current European telecommunications standards institute (ETSI) regulations - state that the energy measured across all antennas during CCA is required to be below a pre-defined threshold for the channel to be declared as idle so that transmission is allowed. Thus, the CCA procedure applies omni-directional considerations. When a successful CCA procedure has been completed, the multi-antenna transmitter node is allowed to transmit in a directional or omni-directional fashion during the MCOT.

For directional transmission, the selection of transmission beam is important to achieve performance which is as good as possible.

Therefore, there is a need for approaches to transmission beam selection in wireless communication environments requiring clear channel assessment (CCA) before transmission.

## SUMMARY

The aspects of the present invention are defined by the appended independent claims.

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

Also generally, when a CCA procedure is referred to herein, it is meant to encompass any procedure where the transmitter node makes a determination whether or not the activity on the channel is low enough to admit transmission. Such procedures include, CCA procedures, listen-before-talk (LBT) procedures, carrier sense multiple access with collision avoidance (CSMA/CA) procedures, etc.

Furthermore, when performance is referred to herein, it is generally meant to encompass any suitable performance metric. For example, performance may be per link, per user, per system subunit (e.g., a cell), or overall for an entire system. Example performance metrics includes, throughput, capacity, error rate, latency, etc.

It is an object of some embodiments to solve or mitigate, alleviate, or eliminate at least some disadvantages relating to transmission beam selection in wireless communication environments requiring clear channel assessment (CCA) before transmission.

A first aspect is according to claim 1. This aspect is directed to a method of a transmitter node comprising a plurality of antenna elements and configured for beamformed transmission in a wireless communication environment requiring clear channel assessment (CCA) before transmission.

The method comprises performing CCA measurements by measuring received energy of the plurality of antenna elements based on a respective received signal of each antenna element, taking a CCA decision based on the measured received energy of the plurality of antenna elements, transforming the measured received energy of the plurality of antenna elements into measured received energy of each angular direction of a plurality of angular directions, and selecting transmission beam based on the measured received energy of each angular direction of the plurality of angular directions.

Transforming the measured received energy of the plurality of antenna elements into measured received energy of each angular direction of a plurality of angular directions comprises transforming the respective received signals of the plurality of antenna elements into a respective received signal of each angular direction and determining the measured received energy of each angular direction based on the corresponding respective received signal.

In some embodiments, selecting transmission beam based on the measured received energy of the plurality of angular directions comprises (when the CCA decision indicates a clear channel) identifying angular directions having a measured received energy which is higher than a first threshold value, and selecting a transmission beam having a transmit energy in the identified angular directions, which is lower than if the transmission beam would not be selected based on the measured received energy of the plurality of angular directions.

In some embodiments, selecting transmission beam based on the measured received energy of the plurality of angular directions comprises (when the CCA decision indicates a clear channel) identifying angular directions having a measured received energy which is higher than a first threshold value, and selecting a transmission beam having a transmit energy which is lower than a third threshold value in the identified angular directions.

In some embodiments, selecting transmission beam based on the measured received energy of the plurality of angular directions comprises (when the CCA decision indicates a clear channel) identifying angular directions having a measured received energy which is higher than a first threshold value, and selecting a transmission beam having no transmit energy in the identified angular directions.

In some embodiments, selecting transmission beam based on the measured received energy of the plurality of angular directions comprises (when the CCA decision indicates a clear channel) selecting a transmission beam having an angular direction for which the measured received energy is below a first threshold value.

In some embodiments, the method further comprises (when the CCA decision indicates a busy channel) taking a further CCA decision based on the measured received energy of a sub-set of the plurality of angular directions.

In some embodiments, the sub-set of the plurality of angular directions comprises angular directions for which the measured received energy is below a second threshold value.

In some embodiments, the method further comprises updating a wireless communication environment map based on the measured received energy of the plurality of angular directions. In some embodiments, the wireless communication environment map is indicative of one or more of respective locations of one or more other transmitter nodes, and respective time and/or frequency patterns for transmissions from the one or more other transmitter nodes.

In some embodiments, selecting transmission beam is further based on the wireless communication environment map.

In some embodiments, the method further comprises taking a handover decision based on the wireless communication environment map.

In some embodiments, the method further comprises detecting a regulation breach based on the wireless communication environment map.

In some embodiments, the plurality of angular directions are omni-directionally distributed.

In some embodiments, the wireless communication environment requiring CCA before transmission uses an unlicensed frequency spectrum.

A second aspect is according to independent claim 10. This aspect is directed to a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is according to independent claim 11. This aspect is directed to an apparatus for a transmitter node, wherein the transmitter node comprises a plurality of antenna elements and is configured for beamformed transmission in a wireless communication environment requiring clear channel assessment (CCA) before transmission. The apparatus comprises controlling circuitry configured to cause performance of CCA measurements by measurements of received energy of the plurality of antenna elements based on a respective received signal of each antenna element, taking of a CCA decision based on the measured received energy of the plurality of antenna elements, transformation of the measured received energy of the plurality of antenna elements into measured received energy of each angular direction of a plurality of angular directions, and selection of transmission beam based on the measured received energy of each angular direction of the plurality of angular directions when the CCA decision indicates a clear channel.

Transformation of the measured received energy of the plurality of antenna elements into measured received energy of each angular direction of a plurality of angular directions comprises transformation of the respective received signals of the plurality of antenna elements into a respective received signal of each angular direction and determination of the measured received energy of each angular direction based on the corresponding respective received signal.

The third aspect may be formulated as the apparatus comprising a CCA performer, a transformer, and a beam selector. The CCA performer is configured to perform CCA measurements by measurements of received energy of the plurality of antenna elements based on a respective received signal of each antenna element, and take a CCA decision based on the measured received energy of the plurality of antenna elements. The transformer is configured to transform the measured received energy of the plurality of antenna elements into measured received energy of each angular direction of a plurality of angular directions. The beam selector is configured to select transmission beam based on the measured received energy of each angular direction of the plurality of angular directions when the CCA decision indicates a clear channel.

A fourth aspect is according to independent claim 16. This aspect is directed to a transmitter node comprising the apparatus of the third aspect.

In some embodiments, any of the above aspects may additionally have features identical with or corresponding to any of the various features as explained above for any of the other aspects.

An advantage of some embodiments is that approaches to transmission beam selection in wireless communication environments requiring clear channel assessment (CCA) before transmission are provided.

An advantage of some embodiments is that the selection of transmission beam takes into account the interference information - in particular the angular distribution of interference - acquired during CCA measurements.

An advantage of some embodiments is that the beam selection may be improved compared to a selection approach assuming an interference free environment, thereby improving performance (e.g., improving the overall network performance).

An advantage of some embodiments is that resource usage due to CCA measurements and beam forming measurements may be reduced (reducing resource overhead needed for measurements), thereby improving (e.g., increasing) capacity and/or throughput.

## BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.

Figure 1 is a flowchart illustrating example method steps according to some embodiments;

Figure 2 is a flowchart illustrating example method steps according to some embodiments;

Figure 3 is a flowchart illustrating example method steps according to some embodiments;

Figure 4 is a schematic block diagram illustrating an example apparatus according to some embodiments;

Figure 5 is a schematic block diagram illustrating an example arrangement according to some embodiments;

Figure 6 is a schematic plot illustrating example angular distributions according to some embodiments;

Figure 7 is a schematic drawing illustrating example signal propagation according to some embodiments;

Figure 8 are simulation plots illustrating example results achievable by application of some embodiments;

Figure 9 is a schematic drawing illustrating an example computer readable medium according to some embodiments;

Figure 10 illustrates a telecommunication network connected via an intermediate network to a host computer in accordance with some embodiments;

Figure 11 illustrates a host computer communicating via a base station with a user equipment over a partially wireless connection in accordance with some embodiments;

Figure 12 is a flowchart illustrating example method steps implemented in a communication system including a host computer, a base station and a user equipment in accordance with some embodiments;

Figure 13 is a flowchart illustrating example method steps implemented in a communication system including a host computer, a base station and a user equipment in accordance with some embodiments;

Figure 14 is a flowchart illustrating example method steps implemented in a communication system including a host computer, a base station and a user equipment in accordance with some embodiments; and

Figure 15 is a flowchart illustrating example method steps implemented in a communication system including a host computer, a base station and a user equipment in accordance with some embodiments.

## DETAILED DESCRIPTION

Embodiments of the present disclosure will be described and exemplified more fully hereinafter with reference to the accompanying drawings. The solutions disclosed herein can, however, be realized in many different forms and should not be construed as being limited to the embodiments set forth herein.

As mentioned above, use of unlicensed spectra is considered for cellular systems.

To be allowed to transmit in an unlicensed spectrum, a transmitter node is typically required to perform a successful clear channel assessment (CCA) procedure, which is typically - but not necessarily - omnidirectional in its nature. When a successful CCA procedure has been completed, the transmitter node may be allowed to transmit in a directional or omni-directional fashion. For the performance of directional transmission (applicable for multi-antenna transmitter nodes), selection of a suitable transmission beam is important.

Some approaches to transmission beam selection are well known in the art. For example, a base station (e.g., an evolved NodeB, eNB, or a generalized eNB, gNB) beam selection approach may select transmission beam based on the outcome of a downlink beam sweeping procedure using beam-formed synchronization signal blocks (SSB) and/or channel state information reference signals (CSI-RS), or based on received uplink reference signals in reciprocity-based operation.

Transmission beam selection in unlicensed spectra (e.g., for new radio unlicensed; NR-U) are generally based on the same mechanisms as used in licensed spectra (e.g., for new radio; NR). This approach can be problematic since mechanisms used in licensed spectra are typically designed for systems that operate in an almost interference-free setup, or at least a setup where the interference levels are known and under control (as it is the case for licensed spectra systems since the spectra are auctioned, the transmissions are scheduled, etc.), while unlicensed spectra are typically not almost interference-free and/or typically have an interference level which is highly varying; in a way which is very hard to predict.

Thus, transmission beam selection might benefit from taking account of the possible interference present in unlicensed spectra. This may be particularly beneficial when an interference source is from a different network than the transmitter node.

In the following, embodiments will be described where interference information (more particularly angular interference information) acquired in during CCA measurements are used in transmission beam selection.

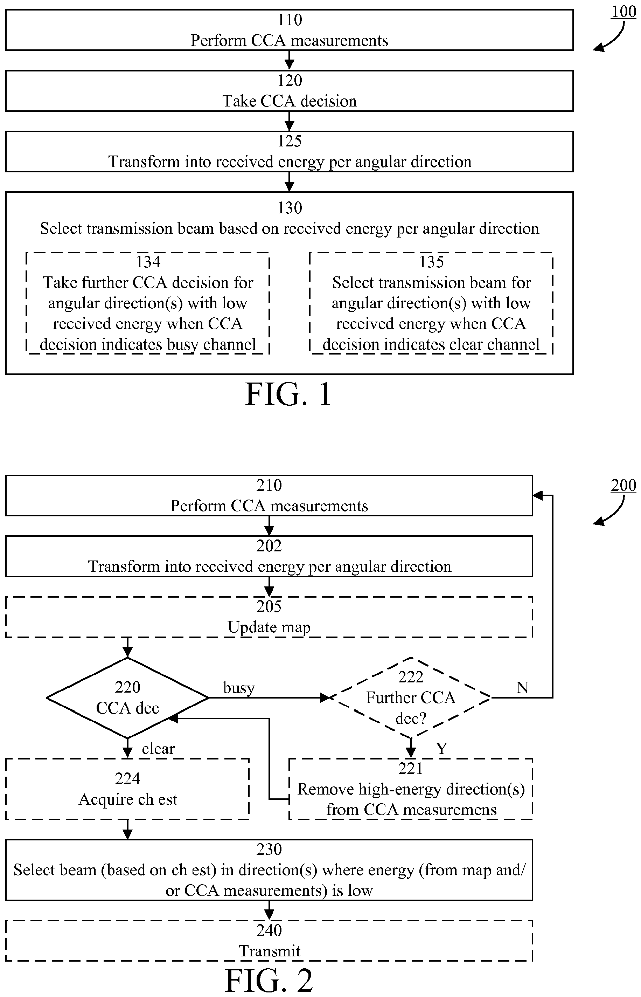

Figure 1 illustrates an example method 100 according to some embodiments. The method 100 is for a transmitter node comprising a plurality of antenna elements and configured for beam-formed transmission in a wireless communication environment requiring clear channel assessment (CCA) before transmission; e.g., a wireless communication using unlicensed frequency spectrum.

In step 110, CCA measurements are performed by measuring received energy of the plurality of antenna elements. The CCA measurements may be performed using any suitable known or future approach, e.g., considering the received energy.

In step 120, a CCA decision is taken based on the measured received energy of the plurality of antenna elements. The CCA decision may be taken using any suitable known or future approach. For example, the CCA decision may comprise determining that the channel is idle when an average received energy of the plurality of antenna elements is below an energy threshold (a pre-defined threshold, for example) during some time, e.g., for a specific number of time intervals, and determining the channel to be busy otherwise.

In step 125, the measured received energy of the plurality of antenna elements is transformed into measured received energy of a plurality of angular directions. The transformation of measured received energy from antenna domain to angular domain may be performed using any suitable known or future approach. The implementation may, for example, be achieved using a fast Fourier transform (FFT).

In some embodiments, step 125 may utilize information regarding magnitude and phase of the received signal (e.g., received baseband signal) to perform the transformation of the measured received energy of the plurality of antenna elements is transformed into measured received energy of the plurality of angular directions. For example, the phase of the received signal may be acquired from complex-valued measurements across the plurality of antenna elements, indicative of a phase pattern which is a function of the dominant angle(s) of the received signal. The received energy corresponds to the squared magnitude of the received signal.

Additionally or alternatively, other information regarding characteristics of the antenna array may be used to perform the transformation of the measured received energy of the plurality of antenna elements into measured received energy of the plurality of angular directions. Examples include, but are not limited to, array geometry (e.g., linear array, circular array, or planar array), antenna radiation pattern, etc.

Generally, it should be noted that, when the term "(measured) energy" is used herein, it may refer either to the actual energy (squared magnitude of complex-valued measurements) or to complex-valued measurements (i.e., magnitude and phase information, which is indicative of the actual energy). In typical implementations, most of the processing is done using the complex-valued measurements.

Generally, when a plurality of angular directions are referred to herein, they may be omni-directionally distributed, or distributed according to any other suitable angular pattern.

In step 130, transmission beam selection is performed based on the measured received energy of the plurality of angular directions. Typically, transmission beam selection is performed when the CCA decision indicates the channel as clear. The selected transmission beam may then be used for transmission (not shown in Figure 1).

Generally, when a transmission beam is referred to herein, it is meant to encompass any special angular pattern that can be used for transmission. Such patterns include any pattern of energy (and possibly phase) distributed across one, some, or all possible directions; e.g., one-dimensional patterns, two-dimensional patterns, three-dimensional patterns, azimuth patterns, azimuth/altitude patterns, single beam patterns of any suitable angular width (e.g., discrete Fourier transform, DFT, beams or pencil beams), transmission patterns comprising a combination of single beam patterns, etc.

In some embodiments, the transmission beam selection of step 130 is further based on channel estimates. Acquisition of channel estimates may be performed using any suitable known or future approach. For example, channel estimation may comprise using beam sweeping and/or reciprocity-based reference signaling.

In some embodiments, step 130 may comprise identifying angular directions having relatively high measured received energy (e.g., angular directions having a measured received energy which is higher than a first threshold value), and removing such identified angular directions from consideration when performing transmission beam selection based on angular channel estimates according to any suitable known or future approach.

Thus, such embodiments comprise selecting transmission beam having an angular direction for which the measured received energy is below the first threshold value.

The first threshold value may be dynamic or static. Furthermore, it may be an absolute value (e.g., an absolute energy value) or a relative value (e.g., relative to a maximum allowed or possible transmit power, relative to a maximum value of the angular distribution of received energy, etc.).

In some embodiments, step 130 may comprise identifying angular directions having relatively high measured received energy (e.g., angular directions having a measured received energy which is higher than a first threshold value), and selecting a transmission beam having a transmit energy in the identified angular directions, which is lower than if the transmission beam would not be selected based on the measured received energy of the plurality of angular directions.

In some embodiments, step 130 may comprise identifying angular directions having relatively high measured received energy (e.g., angular directions having a measured received energy which is higher than a first threshold value), and selecting a transmission beam based on angular channel estimates such that the selected transmission beam has relatively low transmit energy (e.g., transmit energy which is lower than a third threshold value) in the identified angular directions.

The third threshold value may be dynamic or static. Furthermore, it may be an absolute value (e.g., an absolute energy value) or a relative value (e.g., relative to a maximum allowed or possible transmit power, relative to a maximum value of the angular distribution of received energy, etc.).

In some embodiments, step 130 may comprise identifying angular directions having relatively high measured received energy (e.g., angular directions having a measured received energy which is higher than a first threshold value), and selecting a transmission beam having no transmit energy (e.g., nulls) in the identified angular directions.

Put more generally, step 130 may comprise selecting transmission beam for angular direction(s) with relatively low received energy when the CCA decision indicates a clear channel, as illustrated by optional sub-step 135.

In some embodiments, a further CCA decision may be taken in step 130 when the CCA decision of step 120 indicates a busy channel, wherein the further CCA decision is based on the measured received energy of a sub-set of the plurality of angular directions. This is exemplified by optional sub-step 134. If the further CCA decision indicates a clear channel, transmission beam selection may be performed (e.g., as described above).

For example, step 130 may comprise identifying angular directions having relatively high measured received energy (e.g., angular directions having a measured received energy which is higher than a second threshold value), and removing such identified angular directions from consideration when performing the further CCA decision. Thus, the sub-set of the plurality of angular directions may comprise angular directions for which the measured received energy is below the second threshold value.

The second threshold value may be dynamic or static. Furthermore, it may be an absolute value (e.g., an absolute energy value) or a relative value (e.g., relative to a maximum allowed or possible transmit power, relative to a maximum value of the angular distribution of received energy, etc.).

Figure 2 illustrates an example method 200 according to some embodiments. The method 200 is for a transmitter node comprising a plurality of antenna elements and configured for beam-formed transmission in a wireless communication environment requiring clear channel assessment (CCA) before transmission; e.g., a wireless communication using an unlicensed frequency spectrum.

In step 210, CCA measurements are performed by measuring received energy of the plurality of antenna elements (compare with step 110 of Figure 1).

In step 202, the measured received energy of the plurality of antenna elements is transformed into measured received energy of a plurality of angular directions (compare with step 125 of Figure 1).

In step 220, a CCA decision is taken based on the measured received energy of the plurality of antenna elements (compare with step 120 of Figure 1).

When the CCA decision of step 220 indicates the channel as clear, transmission beam selection is performed based on the measured received energy of the plurality of angular directions in step 230 (compare with steps 130 and 135 of Figure 1).

Typically, the transmission beam selection of step 230 is based on channel estimation acquired in optional step 224. Acquisition of channel estimates may be performed using any suitable known or future approach. For example, channel estimation may comprise using beam sweeping and/or reciprocity-based reference signaling.

The transmission beam selection of step 230 may be performed according to any of the approaches described in connection with Figure 1. For example, the transmission beam may be selected to have dominant transmission direction(s) that have relatively low measured received energy.

When the CCA decision of step 220 indicates the channel as busy, the method may comprise determining whether or not to perform a further CCA decision based on the performed CCA measurements, as illustrated by optional step 222.

When it is determined not to perform any further CCA decision (N-path out from 222), the method returns to step 210 where new CCA measurements are performed.

When it is determined to perform a further CCA decision (Y-path out from 222), the method may comprise removing angular direction(s) having relatively high measured received energy (e.g., angular directions having a measured received energy which is higher than a second threshold value) from the CCA measurements as illustrated by optional step 221, and taking a further (e.g., second) CCA decision is based on the measured received energy of the - thus reduced - plurality of angular directions as illustrated by return to step 220 from optional step 221 (compare with steps 130 and 134 of Figure 1).

When the further CCA decision of step 220 indicates the channel as busy, the method may return to step 210 to perform new CCA measurements.

When the further CCA decision of step 220 indicates the channel as clear, transmission beam selection is performed based on the measured received energy of the plurality of angular directions in step 230 as described above.

The selected transmission beam may then be used for transmission as illustrated by optional step 240.

In some embodiments, a wireless communication environment map may be kept to store historical data/statistics of CCA measurements. The map may be kept locally at the transmitter node, or - possibly distributed - at one or more other location(s) (e.g., in a cloud-based fashion). The map may comprise data/statistics of CCA measurements relating to the transmitter node and/or relating to one or more other transmitter nodes.

Typically, the map is indicative of one or more of respective locations of one or more transmitter nodes, and of respective time and/or frequency patterns for transmissions from the one or more other transmitter nodes.

As illustrated by optional step 205, the method may further comprise updating the wireless communication environment map based on the received energy measured in step 210 and transformed to the plurality of angular directions in step 202.

Updating the map may, for example, comprise sending the received energy information to the location(s) where the map is kept and/or receiving received energy information relating to other transmitter nodes if the map is kept locally.

In some embodiments, updating the map may involve information regarding magnitude and phase of the received signal (e.g., received baseband signal); not only the measured received energy. For example, the phase of the received signal may be acquired from complex-valued measurements across the plurality of antenna elements, indicative of a phase pattern which is a function of the phase of the received signal. The received energy corresponds to the squared magnitude of the received signal.

When a map is kept, the selection of transmission beam in step 230 may be further based on the wireless communication environment map; additionally or alternatively to using the CCA measurements of step 210 directly. Such an approach may be more reliable than using only the current CCA measurements.

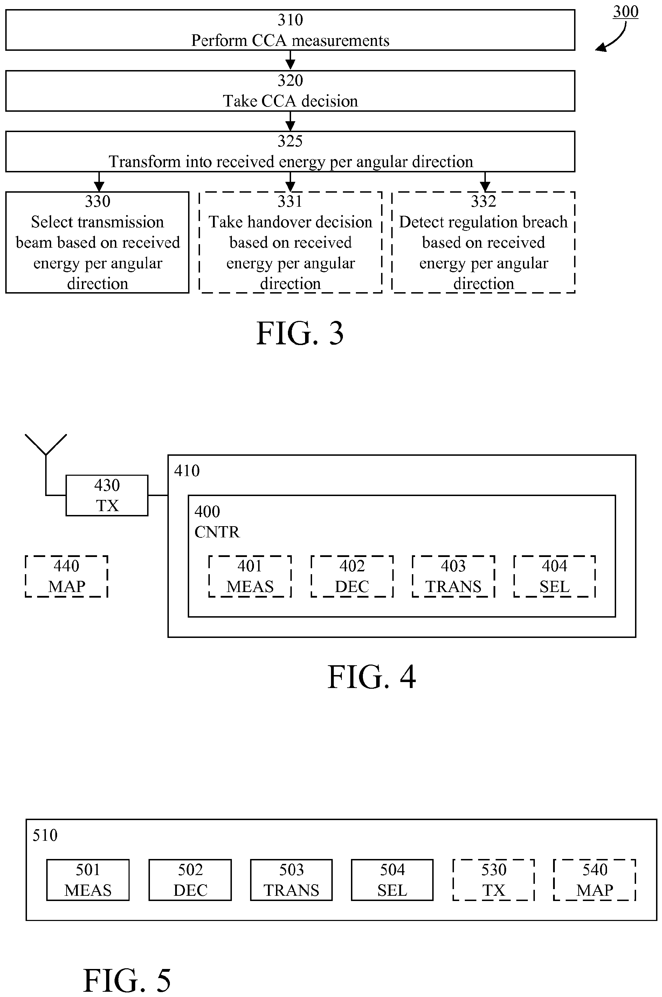

Figure 3 illustrates an example method 300 according to some embodiments. The method 300 is for a transmitter node comprising a plurality of antenna elements and configured for beam-formed transmission in a wireless communication environment requiring clear channel assessment (CCA) before transmission; e.g., a wireless communication using an unlicensed frequency spectrum.

In step 310, CCA measurements are performed by measuring received energy of the plurality of antenna elements (compare with step 110 of Figure 1 and step 210 of Figure 2).

In step 320, a CCA decision is taken based on the measured received energy of the plurality of antenna elements (compare with step 120 of Figure 1 and step 220 of Figure 2).

In step 325, the measured received energy of the plurality of antenna elements is transformed into measured received energy of a plurality of angular directions (compare with step 125 of Figure 1 and step 202 of Figure 2).

When the CCA decision indicates the channel as clear, transmission beam selection is performed based on the measured received energy of the plurality of angular directions in step 330 (compare with steps 130 and 135 of Figure 1 and step 230 of Figure 2). The selected transmission beam may then be used for transmission (not shown).

As illustrated by optional step 331, the measured received energy of the plurality of angular directions (e.g., in the form of a wireless communication environment map as described in connection to Figure 2) may be used to take handover decision(s).

For example, when one carrier becomes unusable and/or when the throughput falls below a specified threshold value and/or when new interference shows up, the transmitter node (e.g., a gNB) may use knowledge of CCA measurements in other carriers to select which carrier to transfer communication with a receiver node (e.g., a UE) to, and adapt the beam configuration before transferring to the other carrier. A similar approach may be used by the transmitter node when handing over the receiver node from one cell to another cell; i.e., use the knowledge of CCA measurements when selecting an appropriate carrier, and performing beam configuration.

Alternatively or additionally, as illustrated by optional step 332, the measured received energy of the plurality of angular directions (e.g., in the form of a wireless communication environment map as described in connection to Figure 2) may be used to detect a regulation breach.

A regulation breach could, for example, comprise a transmitter node using a transmission power which is higher than allowed according to regulations for the unlicensed spectrum.

Another example of a regulation breach, could be a receiver node (e.g., a UE) not following the listen before talk (LBT) paradigm for unlicensed band; occupying a specific angle (or a plurality of angles) for a longer duration than allowed by regulations.

It should be noted that steps described in any of the Figures 1-3 may be combined with any other steps described in any other one of the Figures 1-3, as suitable. It should also be noted that the order of the steps described in any of the Figures 1-3 may be varied, as suitable. For example, steps 120 and 125 of Figure 1 may be performed in reversed order, or in parallel. The same applies to steps 320 and 325 of Figure 3. Furthermore, step 202 of Figure 2 may be performed anywhere between steps 210 and 230 when the CCA decision of step 220 indicates a clear channel, and anywhere between steps 210 and 221 when the CCA decision of step 220 indicates a busy channel. Yet further, step 205 of Figure 2 may be performed anywhere after step 210.

Figure 4 schematically illustrates an example apparatus 410 according to some embodiments. The apparatus 410 is for a transmitter node, wherein the transmitter node comprises a plurality of antenna elements and is configured for beam-formed transmission in a wireless communication environment requiring clear channel assessment (CCA) before transmission. For example, the apparatus 410 may be configured to perform any of the methods 100, 200, and 300.

The apparatus comprises a controller (CNTR; e.g., a control module or controlling circuitry) 400.

The controller is configured to cause performance of CCA measurements by measurements of received energy of the plurality of antenna elements (compare with steps 110, 210, 310 of Figures 1, 2, 3; respectively). To this end, the controller may comprise, or be otherwise associated with (e.g., connectable or connected to), a measurer (MEAS; e.g., a measurement module or measurement circuitry) 401. The measurer may be configured to perform CCA measurements by measurements of received energy of the plurality of antenna elements.

The controller is also configured to cause taking of a CCA decision based on the measured received energy of the plurality of antenna elements (compare with steps 120, 220, 320 of Figures 1, 2, 3; respectively). To this end, the controller may comprise, or be otherwise associated with (e.g., connectable or connected to), a decider (DEC; e.g., a decision module or deciding circuitry) 402. The decider may be configured to take a CCA decision based on the measured received energy of the plurality of antenna elements.

The controller is also configured to cause transformation of the measured received energy of the plurality of antenna elements into measured received energy of a plurality of angular directions (compare with steps 125, 202, 325 of Figures 1, 2, 3; respectively). To this end, the controller may comprise, or be otherwise associated with (e.g., connectable or connected to), a transformer (TRANS; e.g., a transformer module or transformation circuitry) 403. The transformer may be configured to transform the measured received energy of the plurality of antenna elements into measured received energy of a plurality of angular directions.

The controller is also configured to cause selection of transmission beam based on the measured received energy of the plurality of angular directions when the CCA decision indicates a clear channel (compare with steps 130, 230, 330 of Figures 1, 2, 3; respectively). To this end, the controller may comprise, or be otherwise associated with (e.g., connectable or connected to), a selector (SEL; e.g., a selection module or selecting circuitry) 404. The selector may be configured to select transmission beam based on the measured received energy of the plurality of angular directions.

The controller may be further configured to cause using the selected transmission beam for transmission (compare with step 240 of Figure 2). To this end, the controller may comprise, or be otherwise associated with (e.g., connectable or connected to), a transmitter (TX; e.g., a transmission module or transmitter circuitry) 430. The transmitter may be configured to use selected transmission beam for transmission.

The controller may be further configured to cause updating of a wireless communication environment map (MAP) 440 based on the measured received energy of the plurality of angular directions, as described above.

Figure 5 schematically illustrates an example arrangement 510 according to some embodiments. The arrangement 510 is for a transmitter node, wherein the transmitter node comprises a plurality of antenna elements and is configured for beam-formed transmission in a wireless communication environment requiring clear channel assessment (CCA) before transmission. For example, the arrangement 510 may be configured to perform one or more steps of any of the methods 100, 200, and 300 of Figures 1, 2, and 3; respectively.

The arrangement comprises a measurement unit (MEAS; e.g., a measurement module or measurement circuitry) 501 configured to perform CCA measurements by measurements of received energy of the plurality of antenna elements.

The arrangement also comprises a decision unit (DEC; e.g., a decision module or deciding circuitry) 502 configured to take a CCA decision based on the measured received energy of the plurality of antenna elements.

The measurement unit 501 and the decision unit 502 may be comprised in a CCA performer.

The arrangement also comprises a transformer or a transforming unit (TRANS; e.g., a transformer module or transformation circuitry) 503 configured to transform the measured received energy of the plurality of antenna elements into measured received energy of a plurality of angular directions.

The arrangement also comprises beam selector or a selection unit (SEL; e.g., a selection module or selecting circuitry) 504 configured to select transmission beam based on the measured received energy of the plurality of angular directions.

The arrangement may also comprise a transmitter (TX; e.g., a transmission module or transmitter circuitry) 530 configured to use selected transmission beam for transmission.

The arrangement may also comprise a wireless communication environment map (MAP) 540 as described above.

As mentioned before, it may be problematic to perform transmission beam selection in unlicensed spectra based on the same mechanisms as used in licensed spectra; since the latter are typically designed for systems that operate in an almost interference-free setup, while unlicensed spectra are typically not almost interference-free.

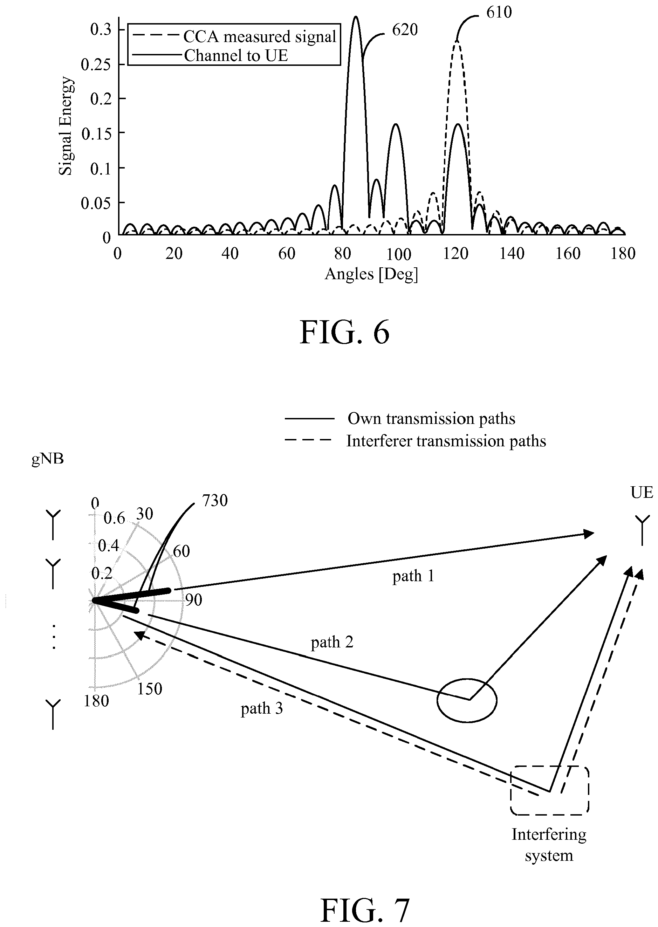

This is illustrated in Figure 6 by way of two example angular distributions 610, 620 according to some embodiments. The angular distribution 610 illustrates an example of received energy measured during CCA measurements (CCA measured signal) after transformation to angular domain. The angular distribution 620 illustrates an example of channel estimates (channel to - e.g. - a user equipment, UE), which may be achieved using any suitable approach; e.g., beam sweeping, channel sounding, or similar.

According to some approaches, the angular distribution 620 may be used for transmission beam selection. On the other hand, both angular distributions 610 and 620 may be used in combination for beam selection according to some embodiments, thereby using interference information acquired during CCA measurements in transmission beam selection.

In the example of Figure 6, it can be seen from 620 that there are three directions which present good channel estimates: 85 degrees, 100 degrees and 120 degrees, approximately. According to some approaches, the transmitter node may typically select a transmission beam pattern which has much of its energy in one or more of these three directions.

However, it can also be seen from 610 in the example of Figure 6 that one of these three directions (the one at approximately 120 degrees) suffers from high interference. Applying an approach according to embodiments presented herein, the transmitter node may instead select a transmission beam pattern which has no, or little, of its energy in the direction suffering from high interference. As explained above, this may be achieved by removing the direction(s) suffering from high interference from consideration when performing transmission beam selection, for example.

Figure 7 schematically illustrates example signal propagation according to some embodiments, which signal propagation may be associated with the angular distributions of Figure 6. In Figure 7, the transmitter node is exemplified by a gNB aiming to transmit to a UE, while interfered by an interfering system. The solid lines represent possible transmission paths from the gNB to the UE (own transmission paths) as represented by peaks in the channel estimates illustrated by the angular distribution 620 of Figure 6. The dashed lines (interferer transmission paths) represent transmission paths of the interferer towards the gNB, as represented by peaks in the CCA measurements illustrated by the angular distribution 610 of Figure 6, and towards the UE.

As already indicated, one feature of some embodiments relates to using knowledge obtained from the CCA measurements, not only for CCA purposes, but also to aid the construction of a beam-former (a transmission beam).

Examples according to some embodiments will now be presented using the following system model. In these examples, the transmitter node performing CCA and estimating the angle of an interfering source is a network node such as a gNB. However, some embodiments may be equally applicable for any transmitter node of a unlicensed spectrum network, as long as the transmitter node has more than one antenna such that it can perform angular estimation using the signals received across its antennas.

For illustrative (but non-restrictive) purposes, it is assumed that the gNB has a linear array with $M$ antennas and aims to serve a UE which has one single antenna, and that the gNB possesses a noisy estimate of the $1 \times M$ downlink (DL) multiple-input single-output (MISO) channel vector $\boldsymbol{h}_{UE}$, namely $\hat{\boldsymbol{h}}_{UE} = \boldsymbol{h}_{UE} + \boldsymbol{n}$ (compare with 620 of Figure 6). This channel estimate may be acquired according to any suitable approach; e.g., by means of uplink (UL) reference signals and reciprocity, or by means of the gNB sounding a grid-of-beams in the DL and the UE feeding back amplitude and phase associated with the strongest measured beam(s) (compare to NR Type II CSI operation). The uncorrelated zero-mean $N_0$-variance entries of the parameter $\boldsymbol{n}$ model

complex Gaussian noise. The radio channel is modelled as a weighted sum of plane waves according to

$$\boldsymbol{h_{UE}} = \sum_{i=1}^{L_{UE}} a_i \boldsymbol{e}(\theta_i)^T$$

, where

$$\boldsymbol{e}(\theta_i) = \left[ 1 \; e^{\frac{i\pi}{M} sin(\theta_i)} \; ... \; e^{\frac{i\bar{\pi}(M-1)}{M} sin(\theta_i)} \right]^{I}$$

denotes a, so called, steering vector towards the angle $\theta_i$, $a_i$ is a zero-mean independent complex Gaussian coefficient with variance $V_i$, and $L_{UE}$ is the number of resolvable channel paths. The angles $\theta_i$ are mutually independent and are drawn from a uniform distribution ranging over angles from 0 to $2\pi$ (i.e., from 0 to 360 degrees). In a mmWave scenario, the number of resolvable channel paths is typically $L_{UE} \leq 10$. In an outdoor scenario with dominant line-of-sight (LOS) and ground reflection, the number of resolvable channel paths is typically $L_{UE} = 2$.

It is assumed that the model is of the same type for the channel between the gNB and the interfering node, namely 

$$\boldsymbol{h_{int}} = \sum_{i=1}^{L_{Int}} \gamma_i \boldsymbol{e}(\phi_i)^T$$

, where $\boldsymbol{e}(\phi_i)$ denotes a steering vector towards the angle $\phi_i$, $\gamma_i$ is a zero-mean independent complex Gaussian coefficient, and $L_{Int}$ is the number of resolvable channel paths. The angles $\phi_i$ are mutually independent and are drawn from a uniform distribution ranging over angles from 0 to $2\pi$. The angles and complex coefficients of the interferer ($\phi_i$ and $\gamma_i$) are statistically independent of those of the channel to the UE ($\theta_i$ and $a_i$).

In unlicensed environments, the gNB needs to perform CCA, in order to assess whether the channel is idle (i.e., clear) or busy, prior to transmitting to the UE. If a node is equipped with an array of antennas, the current ETSI regulations state that the energy measured across all antennas during CCA is required to be below a predefined threshold for the channel to be declared as idle so that the channel can be accessed.

In practice, this may amount to computing the energy of the CCA signal at each antenna and sending the per-antenna energies to a central unit for computation of a global average energy. In an alternative approach, this may amount to performing a Fourier transform across the antenna domain and averaging the energy in the angular domain (according to Parseval's theorem, the signal energy does not change when transformed to/from the angular, or Fourier, domain).

As mentioned before, Figure 6 illustrates an example of signal representation in the angular domain. Using that example and assuming that the overall interference illustrated by the angular distribution 610 is low enough for passing the condition that renders the CCA procedure successful, it might be beneficial not to transmit in the direction at approximately 120 degrees. The (interfering) ongoing transmission may belong to another unlicensed system, which is operating nearby.

One example reason for avoiding transmission in such direction(s) is related to altruistic coexistence. An altruistic approach might be to avoid beam-forming towards such direction(s) in order not to interfere with the other unlicensed system(s). This would result in improved spatial reuse and improved coexistence between closely located unlicensed systems.

Another example reason for avoiding transmission in such direction(s) is related to minimizing interference of the own link. If the gNB beam-forms towards such direction(s), there is a high probability that the transmitted signal (when received at the UE of interest) is contaminated by interference from the other system. Path 3 of Figure 7 illustrates this risk of the example scenario. If the UE has beamforming capabilities and can choose the direction(s) in which it listens, it would be beneficial for the gNB to transmit all of its energy only towards paths 1 and 2 of Figure 7, as illustrated at 730. Then, the UE could focus its beam-former on these paths and filter out the signal coming from the interferer. Such an approach may cause the interference of the link between the gNB and the UE to be (much) reduced, while no signal energy is lost by use of path 3.

In some embodiments, an example beam-former construction at the gNB uses both the channel estimates and the CCA measurements in order to transmit towards the UE while avoiding transmission in the directions of the interfering system. Such solutions may maximize (or at least increase) the received signal-to-noise ratio (SNR) at the UE, while avoiding losing energy by transmission towards the angles of possible interfering systems.

The beam-former construction approach may, for example, comprise scanning for ongoing (interfering) transmissions using the CCA signal, identifying the directions desirable for transmission, and computing a suitable beam-former (selecting transmission beam) using channel estimates and the directions desirable for transmission.

Scanning for ongoing transmission using the CCA signal may, for example, be implemented as follows. Define the $M \times 1$ column vector $\boldsymbol{y}_{LBT}$, which comprises complex-valued baseband signals received across the $M$ linear array antennas during CCA. Scanning can be done by means of a fast Fourier transform (FFT) matrix multiplication as $\boldsymbol{z}_{LST} = \boldsymbol{F}\boldsymbol{y}_{LBT}$ where the $M \times M$ matrix $\boldsymbol{F}$ denotes an FFT matrix. By squaring the absolute value of the entries of $\boldsymbol{z}_{LBT}$ (denoted by $|\boldsymbol{z}_{LBT}|^2$), an angular distribution of the energy received during CCA measurements is obtained (compare with 610 of Figure 6). This step may, for example, be performed in any of steps 125, 202, 325 of Figures 1-3.

Identifying directions desirable for transmission may, for example, be implemented as follows. Each column of $\boldsymbol{F} = [\boldsymbol{f}_1 \; ... \; \boldsymbol{f}_M]$ can be seen as a steering vector that is associated with one distinct direction, and it is aimed to identify which of these columns are desirable to use in order to serve the UE. In one example approach, selection of directions suitable for transmission is performed while avoiding transmission towards directions where a large signal energy was received during CCA (probably corresponding to directions where ongoing transmissions are taking place). To achieve this, $|z_{LBT}|^2 = [\ z_1\ ...\ z_M\ ]^T$ may be defined, where each entry $z_k$ corresponds to a discrete sample of the CCA signal (compare with 610 of Figure 6). Thus, the approach may comprise selecting only directions where the entries of $|z_{LBT}|^2$ are below a certain threshold (e.g., a first threshold value) $T_{CCA}$. Mathematically, the matrix comprising the suitable directions for transmission may be denoted by $W$, and may be constructed by identifying indices of $|z_{LBT}|^2$ where the entries are higher than $T_{CCA}$ and setting all entries to zero in columns of $F$ having the identified indices. For example, $W = F$ if all $z_k$ are smaller than $T_{CCA}$. Thus, the matrix $W$ resembles $F$, except for that some of its columns - those associated with undesirable direction(s) for transmission - are set to zero (removed). This step may, for example, be performed in any of steps 130, 135, 230, 330 of Figures 1-3.

Computing a suitable beam-former using the estimate of the UE channel and $W$ may, for example, be implemented as follows. The columns of the matrix $W$ define the directions in which it may be desirable to transmit to the UE, but the respective weight that should be applied to each of these directions typically needs to be determined. In the unconstrained case $W = F$, the solution that maximizes the SNR at the receiver is called Maximum Ratio Transmission (MRT) and its beam-former is given by the complex conjugate of the UE noisy channel, $(\hat{h}_{UE})^*$. In the more general case, where $W$ may differ from $F$, a beam-former may be constructed that resembles the MRT beam-former as much as possible given the limitation, defined by $W$, of not transmitting towards undesirable directions. This may be achieved by finding the beam-former $b$ with structure $b = Wc$ that resembles (in a least squares sense) the MRT beam-former mostly, where an entry of the vector $c$ comprises a weight associated with a transmit direction. The problem formulation can be expressed as

$$\hat{c} = \underset{c}{\mathrm{argmin}}\ ||\ (\widehat{h}_{UE})^* - b\ ||^2$$

and the solution is given by $\hat{c} = (W^H W)^{-1} W^H (\hat{h}_{UE})^*$. If the matrix $W$ is constructed only from a subset of the columns of a discrete Fourier transform (DFT) matrix, it is known that $W^H W = I$ and the weight calculation simplifies to $\hat{c} = W^H (\hat{h}_{UE})^*$, yielding the beam-former $\hat{b} = W W^H (\hat{h}_{UE})^*$. This step may, for example, be performed in any of steps 130, 135, 230, 330 of Figures 1-3.

It should be noted that, according to this example implementation, the computational operations of the entire process of computing a beam-former is dominated by one FFT operation and two matrix multiplications. If the Gramian matrix $W W^H$ is tracked over time, only one multiplication ($\hat{b} = W W^H (\hat{h}_{UE})^*$) needs to be performed for each beam-forming occasion.

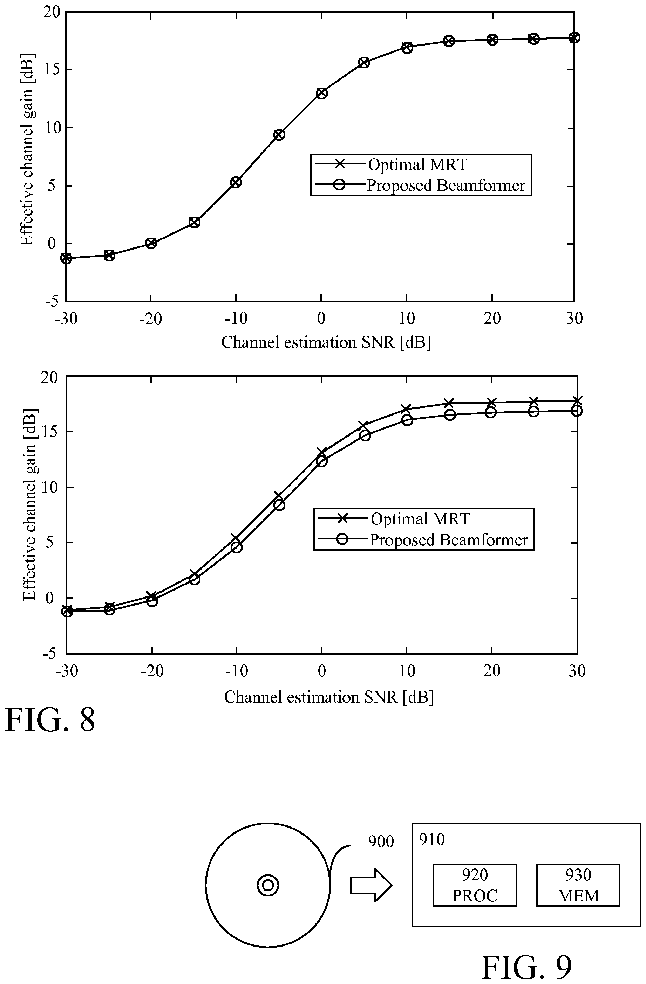

Figure 8 illustrates example simulation results achievable by application of some embodiments. The simulations has been conducted to show performance achieved by application of approaches as presented above (o) in relation to that of (optimal) MRT beamforming (where there is no constraint on the transmit directions), which is used as benchmark (x).

The upper plot of Figure 8 shows performance of the expected effective channel gain $E\{|h_{UE}b|^2\}$ (which is proportional to SNR at the receiver). The horizontal axis shows the channel estimation SNR of each of the entries of $\hat{h}_{UE} = h_{UE} + n$. The simulation parameters are M = 64 gNB antennas, $L_{UE}$ = 4 channel paths to the UE with variances [[ $V_1\ V_2\ V_3\ V_4$] = [ 0.4 0.3 0.2 0.1], $L_{Int}$ = 1 channel paths to the interferer with variance 0.5, and the CCA threshold is set to $T_{CCA}$ = 0.2.

At very low channel estimation SNR, there is no proper estimate regarding direction(s) for transmission of the available energy. Thus, the two methods perform the same since there is no penalty associated with not being able to beam-form in direction(s) with interference. At high SNR, there is no (or very small) loss between the optimal case and the proposed method. This means that the penalty associated with not being able to beam-form in direction(s) is almost non-existing in this scenario.

The lower plot of Figure 8 shows a more extreme scenario. In contrast to the setup of the upper plot, there are $L_{Int}$ = 8 channel paths to the interferer, each with variance 0.5. Thus, there are twice as many interfering paths as there are useful paths to the UE; which may model a scenario where several unlicensed systems are operating in close locations.

At very low channel estimation SNR, there is no proper estimate regarding direction(s) for transmission of the available energy. Thus, the two methods perform the same since there is no penalty associated with not being able to beam-form in direction(s) with interference. At high SNR, there is a notable loss between the optimal case and the proposed method. This means that there is a penalty associated with not being able to beam-form in direction(s) in this scenario.

The performance gap increases between the upper and lower plot since there are less paths that can be used to transmit the energy towards the desired receiver in the scenario of the lower plot. The performance loss appears when there is an overlap between peaks in the CCA measured signals (see peaks of the angular distribution 610 in Figure 6) and paths towards the UE channel (see peaks of the angular distribution 620 in Figure 6). The probability for such overlap increases when the number of interference paths increases.

Even if there is a performance gap compared to the optimal case (e.g., approximately 1dB as in the lower plot), that may be considered acceptable to be able to avoid beam-forming towards other ongoing transmissions. It may be noted that the simulations where defined in a scenario where an interfering transmission was ongoing every single time the gNB tried to transmit to the UE, which will rarely be the case in practice. Thus, the performance gap seen in the simulations may be considered as a worst case scenario. Thus, some embodiments seem to provide good link SNR while allowing for high spatial reuse, which is a very attractive beam-forming option for unlicensed systems.

Some further variations will now be described.

In some embodiments, more than one transmitter node operating in an unlicensed band cooperate in order to estimate the spatial location of an interfering source, based on their respective CCA measured signals.

For example, several UEs and a gNB may cooperate such that each UE detects respective angles associated with interfering node(s) and sends this information to the gNB together with a respective location/-position of the UE. Using this information, the gNB can build a virtual map of the interference situation. The map may be used by the gNB to (better) estimate where there are interferers so that the gNB can avoid transmission in such direction(s). Instead of sending respective angles associated with interfering node(s) directly, the UEs may process the data considering their own position as well as their orientation towards gNB, and send processed data to the gNB. Alternatively, the gNB can use its knowledge of these parameters (e.g., UE orientation, known after initial beam establishment) to process raw data (e.g., respective angles associated with interfering node(s) and respective UE location) from the UEs.

In another example, multiple gNBs and UEs with the same or overlapping coverage may cooperate to produce a spectrum map; possibly covering ranges of time, frequency, location, etc. This map can be kept by each, some, or one, of the gNBs, and may be used for optimizing the associated resources; thereby achieving a higher throughput.

The UEs can use an uplink shared channel (ULSCH) for transmitting the information above to the gNB(s); e.g., by transmitting the information over physical uplink shared channel (PUSCH).

In some embodiments, the gNB is configured to initiate transmission of the information above by requesting one or more UEs to feedback information related to their CCA measurements. The gNB can implement the request by sending a scheduling message (grant) over physical downlink control channel (PDCCH; particularly downlink control information, DCI, formats 0-0 and/or 0-1) to the UEs.

In some embodiments, the UEs are configured to initiate transmission of the information above by sending a scheduling request over physical uplink control channel (PUCCH) / physical uplink shared channel (PUSCH), and sending the information when receiving a scheduling message (grant).

Generally, sending of the information relating to CCA measurements may be configured in the form of periodic or aperiodic reports.

The communication channel used to establish the cooperation between gNB(s) and UE(s) may be in the unlicensed band for which the CCA measurements are performed, or may be a dedicated control channel in a licensed band, for example.

Thus, a CCA-based map may be used to support transmission beam selection according to some embodiments.

Alternatively or additionally, a CCA-based map may be used in a cell handover process, and/or in a process for changing access channel (e.g., carrier handover) efficiently and fast. This may lead to higher throughput and/or lower handover latency.

Yet alternatively or additionally, a CCA-based map may be used to detect regulation breaches (e.g., use of a transmission power that is higher than regulated, which may indicate presence of a jammer).

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device or a network node.

Embodiments may appear within an electronic apparatus (such as a wireless communication device or a network node) comprising arrangements, circuitry, and/or logic according to any of the embodiments described herein. Alternatively or additionally, an electronic apparatus (such as a wireless communication device or a network node) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 9 illustrates an example computer readable medium in the form of a compact disc (CD) ROM 900. The computer readable medium has stored thereon a computer program comprising program instructions. The computer program is loadable into a data processor (PROC; e.g., data processing circuitry or a data processing unit) 920, which may, for example, be comprised in a wireless communication device or a network node 910. When loaded into the data processor, the computer program may be stored in a memory (MEM) 930 associated with or comprised in the data-processing unit. According to some embodiments, the computer program may, when loaded into and run by the data processing unit, cause execution of method steps according to, for example, any of the methods illustrated in Figures 1 through 3 or otherwise described herein.

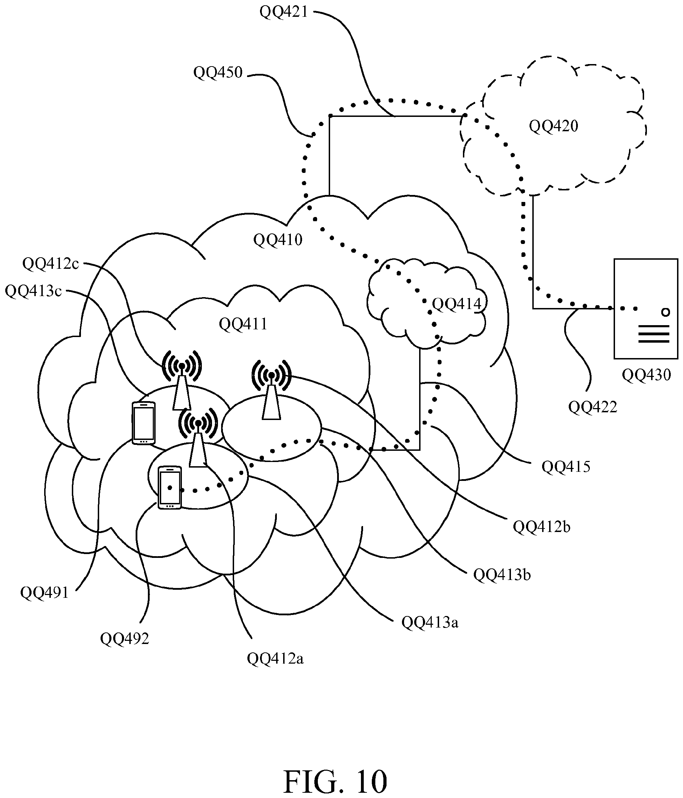

With reference to Figure 10, in accordance with an embodiment, a communication system includes telecommunication network QQ410, such as a 3GPP-type cellular network, which comprises access network QQ411, such as a radio access network, and core network QQ414. Access network QQ411 comprises a plurality of base stations QQ412a, QQ412b, QQ412c, such as NBs, eNBs, gNBs or other types of wireless access points, each defining a corresponding coverage area QQ413a, QQ413b, QQ413c. Each base station QQ412a, QQ412b, QQ412c is connectable to core network QQ414 over a wired or wireless connection QQ415. A first UE QQ491 located in coverage area QQ413c is configured to wirelessly connect to, or be paged by, the corresponding base station QQ412c. A second UE QQ492 in coverage area QQ413a is wirelessly connectable to the corresponding base station QQ412a. While a plurality of UEs QQ491, QQ492 are illustrated in this example, the disclosed embodiments are equally applicable to a situation where a sole UE is in the coverage area or where a sole UE is connecting to the corresponding base station QQ412.

Telecommunication network QQ410 is itself connected to host computer QQ430, which may be embodied in the hardware and/or software of a standalone server, a cloud-implemented server, a distributed server or as processing resources in a server farm. Host computer QQ430 may be under the ownership or control of a service provider, or may be operated by the service provider or on behalf of the service provider. Connections QQ421 and QQ422 between telecommunication network QQ410 and host computer QQ430 may extend directly from core network QQ414 to host computer QQ430 or may go via an optional intermediate network QQ420. Intermediate network QQ420 may be one of, or a combination of more than one of, a public, private or hosted network; intermediate network QQ420, if any, may be a backbone network or the Internet; in particular, intermediate network QQ420 may comprise two or more sub-networks (not shown).

The communication system of Figure Q10 as a whole enables connectivity between the connected UEs QQ491, QQ492 and host computer QQ430. The connectivity may be described as an over-the-top (OTT) connection QQ450. Host computer QQ430 and the connected UEs QQ491, QQ492 are configured to communicate data and/or signaling via OTT connection QQ450, using access network QQ411, core network QQ414, any intermediate network QQ420 and possible further infrastructure (not shown) as intermediaries. OTT connection QQ450 may be transparent in the sense that the participating communication devices through which OTT connection QQ450 passes are unaware of routing of uplink and downlink communications. For example, base station QQ412 may not or need not be informed about the past routing of an incoming downlink communication with data originating from host computer QQ430 to be forwarded (e.g., handed over) to a connected UE QQ491. Similarly, base station QQ412 need not be aware of the future routing of an outgoing uplink communication originating from the UE QQ491 towards the host computer QQ430.

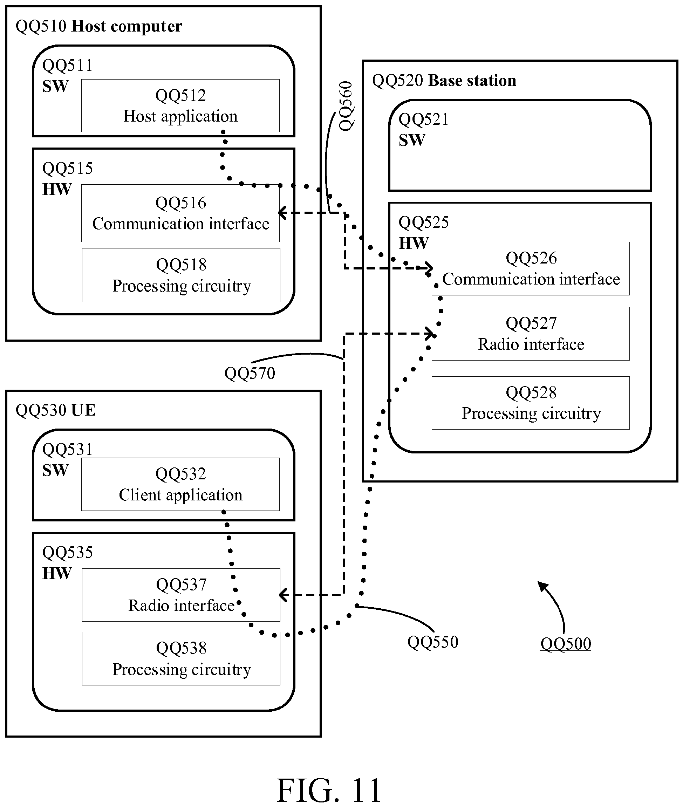

Example implementations, in accordance with an embodiment, of the UE, base station and host computer discussed in the preceding paragraphs will now be described with reference to Figure 11. In communication system QQ500, host computer QQ510 comprises hardware QQ515 including communication interface QQ516 configured to set up and maintain a wired or wireless connection with an interface of a different communication device of communication system QQ500. Host computer QQ510 further comprises processing circuitry QQ518, which may have storage and/or processing capabilities. In particular, processing circuitry QQ518 may comprise one or more programmable processors, application-specific integrated circuits, field programmable gate arrays or combinations of these (not shown) adapted to execute instructions. Host computer QQ510 further comprises software QQ511, which is stored in or accessible by host computer QQ510 and executable by processing circuitry QQ518. Software QQ511 includes host application QQ512. Host application QQ512 may be operable to provide a service to a remote user, such as UE QQ530 connecting via OTT connection QQ550 terminating at UE QQ530 and host computer QQ510. In providing the service to the remote user, host application QQ512 may provide user data which is transmitted using OTT connection QQ550.

Communication system QQ500 further includes base station QQ520 provided in a telecommunication system and comprising hardware QQ525 enabling it to communicate with host computer QQ510 and with UE QQ530. Hardware QQ525 may include communication interface QQ526 for setting up and maintaining a wired or wireless connection with an interface of a different communication device of communication system QQ500, as well as radio interface QQ527 for setting up and maintaining at least wireless connection QQ570 with UE QQ530 located in a coverage area (not shown in Figure 11) served by base station QQ520. Communication interface QQ526 may be configured to facilitate connection QQ560 to host computer QQ510. Connection QQ560 may be direct or it may pass through a core network (not shown in Figure 11) of the telecommunication system and/or through one or more intermediate networks outside the telecommunication system. In the embodiment shown, hardware QQ525 of base station QQ520 further includes processing circuitry QQ528, which may comprise one or more programmable processors, application-specific integrated circuits, field programmable gate arrays or combinations of these (not shown) adapted to execute instructions. Base station QQ520 further has software QQ521 stored internally or accessible via an external connection.

Communication system QQ500 further includes UE QQ530 already referred to. Its hardware QQ535 may include radio interface QQ537 configured to set up and maintain wireless connection QQ570 with a base station serving a coverage area in which UE QQ530 is currently located. Hardware QQ535 of UE QQ530 further includes processing circuitry QQ538, which may comprise one or more programmable processors, application-specific integrated circuits, field programmable gate arrays or combinations of these (not shown) adapted to execute instructions. UE QQ530 further comprises software QQ531, which is stored in or accessible by UE QQ530 and executable by processing circuitry QQ538. Software QQ531 includes client application QQ532. Client application QQ532 may be operable to provide a service to a human or non-human user via UE QQ530, with the support of host computer QQ510. In host computer QQ510, an executing host application QQ512 may communicate with the executing client application QQ532 via OTT connection QQ550 terminating at UE QQ530 and host computer QQ510. In providing the service to the user, client application QQ532 may receive request data from host application QQ512 and provide user data in response to the request data. OTT connection QQ550 may transfer both the request data and the user data. Client application QQ532 may interact with the user to generate the user data that it provides.

It is noted that host computer QQ510, base station QQ520 and UE QQ530 illustrated in Figure 11 may be similar or identical to host computer QQ430, one of base stations QQ412a, QQ412b, QQ412c and one of UEs QQ491, QQ492 of Figure 10, respectively. This is to say, the inner workings of these entities may be as shown in Figure 11 and independently, the surrounding network topology may be that of Figure 10.

In Figure 11, OTT connection QQ550 has been drawn abstractly to illustrate the communication between host computer QQ510 and UE QQ530 via base station QQ520, without explicit reference to any intermediary devices and the precise routing of messages via these devices. Network infrastructure may determine the routing, which it may be configured to hide from UE QQ530 or from the service provider operating host computer QQ510, or both. While OTT connection QQ550 is active, the network infrastructure may further take decisions by which it dynamically changes the routing (e.g., on the basis of load balancing consideration or reconfiguration of the network).

Wireless connection QQ570 between UE QQ530 and base station QQ520 is in accordance with the teachings of the embodiments described throughout this disclosure. One or more of the various embodiments improve the performance of OTT services provided to UE QQ530 using OTT connection QQ550, in which wireless connection QQ570 forms the last segment. More precisely, the teachings of these embodiments may improve transmission beam selection in wireless communication environments requiring clear channel assessment (CCA) before transmission and thereby provide benefits such as improved performance (e.g., throughput and/or capacity).

A measurement procedure may be provided for the purpose of monitoring data rate, latency and other factors on which the one or more embodiments improve. There may further be an optional network functionality for reconfiguring OTT connection QQ550 between host computer QQ510 and UE QQ530, in response to variations in the measurement results. The measurement procedure and/or the network functionality for reconfiguring OTT connection QQ550 may be implemented in software QQ511 and hardware QQ515 of host computer QQ510 or in software QQ531 and hardware QQ535 of UE QQ530, or both. In embodiments, sensors (not shown) may be deployed in or in association with communication devices through which OTT connection QQ550 passes; the sensors may participate in the measurement procedure by supplying values of the monitored quantities exemplified above, or supplying values of other physical quantities from which software QQ511, QQ531 may compute or estimate the monitored quantities. The reconfiguring of OTT connection QQ550 may include message format, retransmission settings, preferred routing etc.; the reconfiguring need not affect base station QQ520, and it may be unknown or imperceptible to base station QQ520. Such procedures and functionalities may be known and practiced in the art. In certain embodiments, measurements may involve proprietary UE signaling facilitating host computer QQ510's measurements of throughput, propagation times, latency and the like. The measurements may be implemented in that software QQ511 and QQ531 causes messages to be transmitted, in particular empty or 'dummy' messages, using OTT connection QQ550 while it monitors propagation times, errors etc.

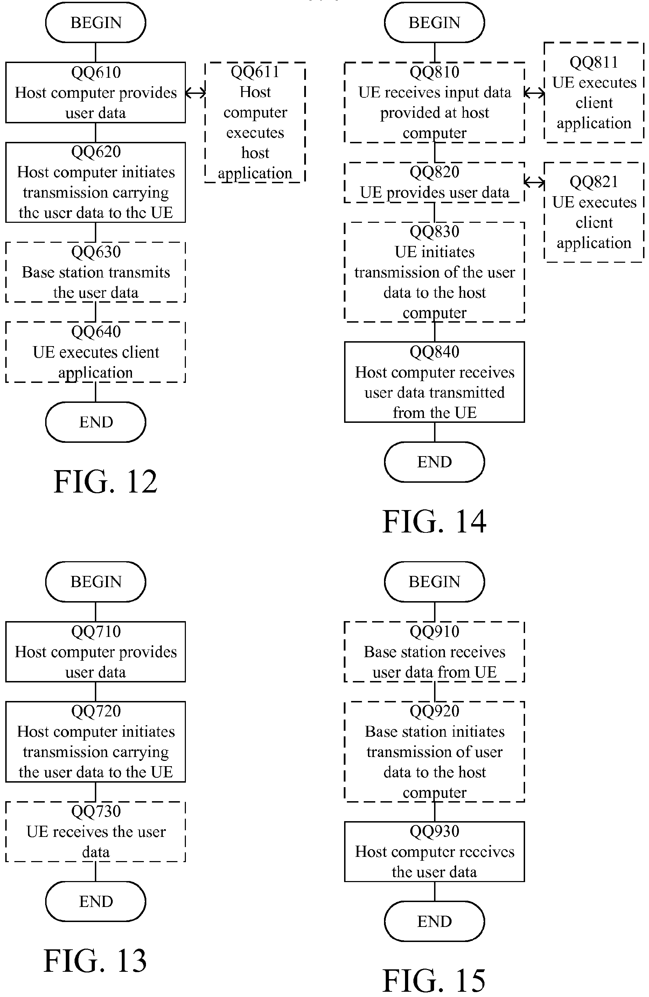

Figure 12 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 12 will be included in this section. In step QQ610, the host computer provides user data. In substep QQ611 (which may be optional) of step QQ610, the host computer provides the user data by executing a host application. In step QQ620, the host computer initiates a transmission carrying the user data to the UE. In step QQ630 (which may be optional), the base station transmits to the UE the user data which was carried in the transmission that the host computer initiated, in accordance with the teachings of the embodiments described throughout this disclosure. In step QQ640 (which may also be optional), the UE executes a client application associated with the host application executed by the host computer.

Figure 13 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 13 will be included in this section. In step QQ710 of the method, the host computer provides user data. In an optional substep (not shown) the host computer provides the user data by executing a host application. In step QQ720, the host computer initiates a transmission carrying the user data to the UE. The transmission may pass via the base station, in accordance with the teachings of the embodiments described throughout this disclosure. In step QQ730 (which may be optional), the UE receives the user data carried in the transmission.

Figure 14 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 14 will be included in this section. In step QQ810 (which may be optional), the UE receives input data provided by the host computer. Additionally or alternatively, in step QQ820, the UE provides user data. In substep QQ821 (which may be optional) of step QQ820, the UE provides the user data by executing a client application. In substep QQ811 (which may be optional) of step QQ810, the UE executes a client application which provides the user data in reaction to the received input data provided by the host computer. In providing the user data, the executed client application may further consider user input received from the user. Regardless of the specific manner in which the user data was provided, the UE initiates, in substep QQ830 (which may be optional), transmission of the user data to the host computer. In step QQ840 of the method, the host computer receives the user data transmitted from the UE, in accordance with the teachings of the embodiments described throughout this disclosure.

Figure 15 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 15 will be included in this section. In step QQ910 (which may be optional), in accordance with the teachings of the embodiments described throughout this disclosure, the base station receives user data from the UE. In step QQ920 (which may be optional), the base station initiates transmission of the received user data to the host computer. In step QQ930 (which may be optional), the host computer receives the user data carried in the transmission initiated by the base station.

## Claims

1. A method performed by a transmitter node comprising a plurality of antenna elements and configured for beam-formed transmission in a wireless communication environment requiring clear channel assessment, CCA, before transmission, the method comprising:

  performing (110, 210, 310) CCA measurements by measuring received energy of the plurality of antenna elements based on a respective received signal of each antenna element;
  taking (120, 220, 320) a CCA decision based on the measured received energy of the plurality of antenna elements;
  transforming (125, 202, 325) the measured received energy of the plurality of antenna elements into measured received energy of each angular direction of a plurality of angular directions, by transforming the respective received signals of the plurality of antenna elements into a respective received signal of each angular direction and determining the measured received energy of each angular direction based on the corresponding respective received signal; and
  selecting (130, 230, 330) transmission beam based on the measured received energy of each angular direction of the plurality of angular directions.

2. The method of claim 1, wherein selecting (130, 230, 330) transmission beam based on the measured received energy of the plurality of angular directions comprises, when the CCA decision (220) indicates a clear channel:

  identifying angular directions having a measured received energy which is higher than a first threshold value; and
  selecting a transmission beam having a transmit energy in the identified angular directions, which is lower than if the transmission beam would not selected based on the measured received energy of the plurality of angular directions.

3. The method of any of claims 1 through 2, further comprising, when the CCA decision (220) indicates a busy channel, taking a further CCA decision (134, 220) based on the measured received energy of a sub-set of the plurality of angular directions, wherein the sub-set of the plurality of angular directions comprises angular directions for which the measured received energy is below a second threshold value.

4. The method of any of claims 1 through 3, further comprising updating (205) a wireless communication environment map based on the measured received energy of the plurality of angular directions.

5. The method of claim 4, wherein the wireless communication environment map is indicative of one or more of respective locations of one or more other transmitter nodes, and respective time and/or frequency patterns for transmissions from the one or more other transmitter nodes.

6. The method of any of claims 4 through 5, wherein selecting (130, 230, 330) transmission beam is further based on the wireless communication environment map.

7. The method of any of claims 4 through 6, further comprising taking a handover decision (331) based on the wireless communication environment map.

8. The method of any of claims 1 through 7, wherein the plurality of angular directions are omni-directionally distributed.

9. The method of any of claims 1 through 8, wherein the wireless communication environment requiring CCA before transmission uses an unlicensed frequency spectrum.

10. A computer program product comprising a non-transitory computer readable medium (900), having thereon a computer program comprising program instructions, the computer program being loadable into a data processing unit and configured to cause execution of the method according to any of claims 1 through 9 when the computer program is run by the data processing unit.

11. An apparatus for a transmitter node, wherein the transmitter node comprises a plurality of antenna elements and is configured for beam-formed transmission in a wireless communication environment requiring clear channel assessment, CCA, before transmission, the apparatus comprising controlling circuitry (400) configured to cause:

   performance of CCA measurements by measurements of received energy of the plurality of antenna elements based on a respective received signal of each antenna element;
   taking of a CCA decision based on the measured received energy of the plurality of antenna elements;
   transformation of the measured received energy of the plurality of antenna elements into measured received energy of each angular direction of a plurality of angular directions, by transformation of the respective received signals of the plurality of antenna elements into a respective received signal of each angular direction and determination of the measured received energy of each angular direction based on the corresponding respective received signal; and
   selection of transmission beam based on the measured received energy of each angular direction of the plurality of angular directions when the CCA decision indicates a clear channel.

12. The apparatus of claim 11, wherein the controlling circuitry is configured to cause selection of transmission beam based on the measured received energy of the plurality of angular directions by causing, when the CCA decision indicates a clear channel:

   identification of angular directions having a measured received energy which is higher than a first threshold value; and
   selection of a transmission beam having a transmit energy in the identified angular directions, which is lower than if the transmission beam would not be selected based on the measured received energy of the plurality of angular directions.

13. The apparatus of any of claims 11 through 12, wherein the controlling circuitry is further configured to cause, when the CCA decision indicates a busy channel, taking of a further CCA decision based on the measured received energy of a sub-set of the plurality of angular directions, wherein the subset of the plurality of angular directions comprises angular directions for which the measured received energy is below a second threshold value.

14. The apparatus of any of claims 11 through 13, wherein the controlling circuitry is further configured to cause updating of a wireless communication environment map based on the measured received energy of the plurality of angular directions.

15. The apparatus of claim 14, wherein the controlling circuitry is configured to cause selection of transmission beam further based on the wireless communication environment map.

16. A transmitter node comprising the apparatus of any of claims 11 through 15.

**Patentansprüche**

1. Verfahren, das von einem Senderknoten ausgeführt wird, der eine Vielzahl von Antennenelementen umfasst und für eine strahlgeformte Übertragung in einer drahtlosen Kommunikationsumgebung konfiguriert ist, die eine Freikanalbeurteilung (CCA) vor der Übertragung erfordert, wobei das Verfahren umfasst:

   Durchführen (110, 210, 310) von CCA-Messungen durch Messen empfangener Energie der Vielzahl von Antennenelementen basierend auf einem jeweiligen empfangenen Signal jedes Antennenelements; Treffen (120, 220, 320) einer CCA-Entscheidung basierend auf der gemessenen empfangenen Energie der Vielzahl von Antennenelementen;

Umwandeln (125, 202, 325) der gemessenen empfangenen Energie der Vielzahl von Antennenelementen in gemessene empfangene Energie jeder Winkelrichtung einer Vielzahl von Winkelrichtungen durch Umwandeln der jeweiligen empfangenen Signale der Vielzahl von Antennenelementen in ein jeweiliges empfangenes Signal jeder Winkelrichtung und Bestimmen der gemessenen empfangenen Energie jeder Winkelrichtung basierend auf dem entsprechenden jeweiligen empfangenen Signal; und

Auswählen (130, 230, 330) eines Übertragungsstrahls basierend auf der gemessenen empfangenen Energie jeder Winkelrichtung der Vielzahl von Winkelrichtungen.

2. Verfahren nach Anspruch 1, wobei das Auswählen (130, 230, 330) eines Übertragungsstrahls basierend auf der gemessenen empfangenen Energie der Vielzahl von Winkelrichtungen, wenn die CCA-Entscheidung (220) einen freien Kanal angibt, umfasst:

Identifizieren von Winkelrichtungen, die eine gemessene empfangene Energie aufweisen, die höher ist als ein erster Schwellenwert; und Auswählen eines Übertragungsstrahls, der eine Übertragungsenergie in den identifizierten Winkelrichtungen aufweist, die niedriger ist als wenn der Übertragungsstrahl nicht basierend auf der gemessenen empfangenen Energie der Vielzahl von Winkelrichtungen ausgewählt würde.

3. Verfahren nach einem der Ansprüche 1 bis 2, das, wenn die CCA-Entscheidung (220) einen belegten Kanal angibt, weiter das Treffen einer weiteren CCA-Entscheidung (134, 220) basierend auf der gemessenen empfangenen Energie einer Teilmenge der Vielzahl von Winkelrichtungen umfasst, wobei die Teilmenge der Vielzahl von Winkelrichtungen Winkelrichtungen umfasst, für die die gemessene empfangene Energie unter einem zweiten Schwellenwert liegt.

4. Verfahren nach einem der Ansprüche 1 bis 3, das weiter das Aktualisieren (205) einer drahtlosen Kommunikationsumgebungskarte basierend auf der gemessenen empfangenen Energie der Vielzahl von Winkelrichtungen umfasst.

5. Verfahren nach Anspruch 4, wobei die drahtlose Kommunikationsumgebungskarte einen oder mehrere jeweiliger Standorte eines oder mehrerer anderer Senderknoten und jeweilige Zeit- und/oder Frequenzmuster für Übertragungen von dem einen oder mehreren anderen Senderknoten angibt.

6. Verfahren nach einem der Ansprüche 4 bis 5, wobei das Auswählen (130, 230, 330) des Übertragungsstrahls weiter auf der drahtlosen Kommunikationsumgebungskarte basiert.

7. Verfahren nach einem der Ansprüche 4 bis 6, das weiter das Treffen einer Übergabeentscheidung (331) basierend auf der drahtlosen Kommunikationsumgebungskarte umfasst.

8. Verfahren nach einem der Ansprüche 1 bis 7, wobei die Vielzahl von Winkelrichtungen omnidirektional verteilt ist.

9. Verfahren nach einem der Ansprüche 1 bis 8, wobei die drahtlose Kommunikationsumgebung, die vor der Übertragung eine CCA erfordert, ein nicht lizenziertes Frequenzspektrum verwendet.

10. Computerprogrammprodukt, das ein nichtflüchtiges, computerlesbares Medium (900) umfasst, das darauf ein Computerprogramm aufweist, das Programmanweisungen umfasst, wobei das Computerprogramm in eine Datenverarbeitungseinheit geladen werden kann und dazu konfiguriert ist, die Ausführung des Verfahrens nach einem der Ansprüche 1 bis 9 zu veranlassen, wenn das Computerprogramm von der Datenverarbeitungseinheit ausgeführt wird.

11. Einrichtung für einen Senderknoten, wobei der Senderknoten eine Vielzahl von Antennenelementen umfasst und für eine strahlgeformte Übertragung in einer drahtlosen Kommunikationsumgebung konfiguriert ist, die eine Freikanalbeurteilung, CCA, vor der Übertragung erfordert, wobei die Einrichtung eine Steuerschaltanordnung (400) umfasst, die dazu konfiguriert ist zu veranlassen:

Durchführung von CCA-Messungen durch Messen empfangener Energie der Vielzahl von Antennenelementen basierend auf einem jeweiligen empfangenen Signal jedes Antennenelements;

Treffen einer CCA-Entscheidung basierend auf der gemessenen empfangenen Energie der Vielzahl von Antennenelementen;

Umwandlung der gemessenen empfangenen Energie der Vielzahl von Antennenelementen in gemessene empfangene Energie jeder Winkelrichtung einer Vielzahl von Winkelrichtungen durch Umwandlung der jeweiligen empfangenen Signale der Vielzahl von Antennenelementen in ein jeweiliges empfangenes Signal jeder Winkelrichtung und Bestimmung der gemessenen empfangenen Energie jeder Winkelrichtung basierend auf dem entsprechenden jeweiligen empfangenen Signal; und Auswahl eines Übertragungsstrahls basierend auf der gemessenen empfangenen Energie jeder Winkelrichtung der Vielzahl von Winkelrichtungen, wenn die CCA-Entscheidung einen freien Kanal angibt.

12. Einrichtung nach Anspruch 11, wobei die Steuerschaltanordnung dazu konfiguriert ist, die Auswahl eines Übertragungsstrahls basierend auf der gemessenen empfangenen Energie der Vielzahl von Winkelrichtungen zu veranlassen, durch Veranlassen, wenn die CCA-Entscheidung einen freien Kanal angibt:

einer Identifizierung von Winkelrichtungen, die eine gemessene empfangene Energie aufweisen, die höher ist als ein erster Schwellenwert; und einer Auswahl eines Übertragungsstrahls, der eine Übertragungsenergie in den identifizierten Winkelrichtungen aufweist, die niedriger ist als wenn der Übertragungsstrahl nicht basierend auf der gemessenen empfangenen Energie der Vielzahl von Winkelrichtungen ausgewählt würde.

13. Einrichtung nach einem der Ansprüche 11 bis 12, wobei die Steuerschaltanordnung weiter dazu konfiguriert ist, wenn die CCA-Entscheidung einen belegten Kanal angibt, weiter das Treffen einer weiteren CCA-Entscheidung basierend auf der gemessenen empfangenen Energie einer Teilmenge der Vielzahl von Winkelrichtungen zu veranlassen, wobei die Teilmenge der Vielzahl von Winkelrichtungen Winkelrichtungen umfasst, für die die gemessene empfangene Energie unter einem zweiten Schwellenwert liegt.

14. Einrichtung nach einem der Ansprüche 11 bis 13, wobei die Steuerschaltanordnung weiter dazu konfiguriert ist, eine Aktualisierung einer drahtlosen Kommunikationsumgebungskarte basierend auf der gemessenen empfangenen Energie der Vielzahl von Winkelrichtungen zu veranlassen.

15. Einrichtung nach Anspruch 14, wobei die Steuerschaltanordnung dazu konfiguriert ist, eine Auswahl eines Übertragungsstrahls weiter basierend auf der drahtlosen Kommunikationsumgebungskarte zu veranlassen.

16. Senderknoten, der die Einrichtung nach einem der Ansprüche 11 bis 15 umfasst.

**Revendications**

1. Procédé exécuté par un noeud émetteur comprenant une pluralité d'éléments d'antenne et configuré pour une transmission formée par faisceau dans un environnement de communication sans fil nécessitant une évaluation de canal libre, CCA, avant une transmission, le procédé comprenant :

la réalisation (110, 210, 310) de mesures de CCA en mesurant l'énergie reçue de la pluralité d'éléments d'antenne sur la base d'un signal reçu respectif de chaque élément d'antenne ; la prise (120, 220, 320) d'une décision de CCA sur la base de l'énergie reçue mesurée de la pluralité d'éléments d'antenne ; la transformation (125, 202, 325) de l'énergie reçue mesurée de la pluralité d'éléments d'antenne en énergie reçue mesurée de chaque direction angulaire d'une pluralité de directions angulaires, en transformant les signaux reçus respectifs de la pluralité d'éléments d'antenne en un signal reçu respectif de chaque direction angulaire et en déterminant l'énergie reçue mesurée de chaque direction angulaire sur la base du signal reçu respectif correspondant ; et la sélection (130, 230, 330) d'un faisceau de transmission sur la base de l'énergie reçue mesurée de chaque direction angulaire de la pluralité de directions angulaires.

2. Procédé selon la revendication 1, dans lequel la sélection (130, 230, 330) d'un faisceau de transmission sur la base de l'énergie reçue mesurée de la pluralité de directions angulaires comprend, lorsque la décision de CCA (220) indique un canal libre :

l'identification de directions angulaires présentant une énergie reçue mesurée qui est supérieure à une première valeur de seuil ; et la sélection d'un faisceau de transmission présentant une énergie de transmission dans les directions angulaires identifiées, qui est inférieure au cas dans lequel le faisceau de transmission n'était pas sélectionné sur la base de l'énergie reçue mesurée de la pluralité de directions angulaires.

3. Procédé selon l'une quelconque des revendications 1 à 2, comprenant en outre, lorsque la décision de CCA (220) indique un canal occupé, la prise d'une décision de CCA (134, 220) supplémentaire sur la base de l'énergie reçue mesurée d'un sous-ensemble de la pluralité de directions angulaires, dans lequel le sous-ensemble de la pluralité de directions angulaires comprend des directions angulaires pour lesquelles l'énergie reçue mesurée est inférieure à une seconde valeur de seuil.

**4.** Procédé selon l'une quelconque des revendications 1 à 3, comprenant en outre la mise à jour (205) d'une carte d'environnement de communication sans fil sur la base de l'énergie reçue mesurée de la pluralité de directions angulaires.

**5.** Procédé selon la revendication 4, dans lequel la carte d'environnement de communication sans fil indique un ou plusieurs d'emplacements respectifs d'un ou de plusieurs autres noeuds émetteurs, et de motifs de temps et/ou de fréquence respectifs pour des transmissions à partir d'un ou de plusieurs autres noeuds émetteurs.

**6.** Procédé selon l'une quelconque des revendications 4 à 5, dans lequel la sélection (130, 230, 330) d'un faisceau de transmission est en outre basée sur la carte d'environnement de communication sans fil.

**7.** Procédé selon l'une quelconque des revendications 4 à 6, comprenant en outre la prise d'une décision de transfert (331) sur la base de la carte d'environnement de communication sans fil.

**8.** Procédé selon l'une quelconque des revendications 1 à 7, dans lequel la pluralité de directions angulaires sont distribuées de manière omnidirectionnelle.

**9.** Procédé selon l'une quelconque des revendications 1 à 8, dans lequel l'environnement de communication sans fil nécessitant une CCA avant une transmission utilise un spectre de fréquence sans licence.

**10.** Produit de programme informatique comprenant un support non-transitoire lisible par ordinateur (900), présentant sur celui-ci un programme informatique comprenant des instructions de programme, le programme informatique pouvant être chargé dans une unité de traitement de données et étant configuré pour provoquer une exécution du procédé selon l'une quelconque des revendications 1 à 9 lorsque le programme informatique est exécuté par l'unité de traitement de données.

**11.** Appareil pour un noeud émetteur, dans lequel le noeud émetteur comprend une pluralité d'éléments d'antenne et est configuré pour une transmission formée par faisceau dans un environnement de communication sans fil nécessitant une évaluation de canal libre, CCA, avant une transmission, l'appareil comprenant un ensemble de circuits de commande (400) configuré pour provoquer :

des mesures de performance de CCA par des mesures d'énergie reçue de la pluralité d'éléments d'antenne sur la base d'un signal reçu respectif de chaque élément d'antenne ; la prise d'une décision de CCA sur la base de l'énergie reçue mesurée de la pluralité d'éléments d'antenne ; la transformation de l'énergie reçue mesurée de la pluralité d'éléments d'antenne en énergie reçue mesurée de chaque direction angulaire d'une pluralité de directions angulaires, par transformation des signaux reçus respectifs de la pluralité d'éléments d'antenne en un signal reçu respectif de chaque direction angulaire et la détermination de l'énergie reçue mesurée de chaque direction angulaire sur la base du signal reçu respectif correspondant ; et la sélection d'un faisceau de transmission sur la base de l'énergie reçue mesurée de chaque direction angulaire de la pluralité de directions angulaires lorsque la décision de CCA indique un canal libre.

**12.** Appareil selon la revendication 11, dans lequel l'ensemble de circuits de commande est configuré pour provoquer une sélection d'un faisceau de transmission sur la base de l'énergie reçue mesurée de la pluralité de directions angulaires en provoquant, lorsque la décision de CCA indique un canal libre :

une identification de directions angulaires présentant une énergie reçue mesurée qui est supérieure à une première valeur de seuil ; et la sélection d'n faisceau de transmission présentant une énergie de transmission dans les directions angulaires identifiées, qui est inférieure au cas dans lequel le faisceau de transmission n'était pas sélectionné sur la base de l'énergie reçue mesurée de la pluralité de directions angulaires.

**13.** Appareil selon l'une quelconque des revendications 11 à 12, dans lequel l'ensemble de circuits de commande est en outre configuré pour provoquer, lorsque la décision de CCA indique un canal occupé, la prise d'une décision de CCA supplémentaire sur la base de l'énergie reçue mesurée d'un sous-ensemble de la pluralité de directions angulaires, dans lequel le sous-ensemble de la pluralité de directions angulaires comprend des directions angulaires pour lesquelles l'énergie reçue mesurée est inférieure à une seconde valeur de seuil.

**14.** Appareil selon l'une quelconque des revendications 11 à 13, dans lequel l'ensemble de circuits de commande est en outre configuré pour provoquer la mise à jour d'une carte d'environnement de communication sans fil sur la base de l'énergie reçue mesurée de la pluralité de directions angulaires.

**15.** Appareil selon la revendication 14, dans lequel l'ensemble de circuits de commande est configuré pour provoquer la sélection d'un faisceau de transmission sur la base en outre de la carte d'environnement de communication sans fil.

16. Noeud émetteur comprenant l'appareil selon l'une quelconque des revendications 11 à 15.

100

> 110
> Perform CCA measurements

> 120
> Take CCA decision

> 125
> Transform into received energy per angular direction

> 130
> Select transmission beam based on received energy per angular direction
>
> > 134
> > Take further CCA decision for angular direction(s) with low received energy when CCA decision indicates busy channel
>
> > 135
> > Select transmission beam for angular direction(s) with low received energy when CCA decision indicates clear channel

## FIG. 1

200

> 210
> Perform CCA measurements

> 202
> Transform into received energy per angular direction

> 205
> Update map

> 220
> CCA dec

busy

> 222
> Further CCA dec?

N

clear

Y

> 224
> Acquire ch est

> 221
> Remove high-energy direction(s) from CCA measuremens

> 230
> Select beam (based on ch est) in direction(s) where energy (from map and/or CCA measurements) is low

> 240
> Transmit

## FIG. 2

310
Perform CCA measurements

320
Take CCA decision

325
Transform into received energy per angular direction

| 330<br>Select transmission beam based on received energy per angular direction | 331<br>Take handover decision based on received energy per angular direction | 332<br>Detect regulation breach based on received energy per angular direction |

_300_

FIG. 3

430
TX

410

440
MAP

400
CNTR

| 401<br>MEAS | 402<br>DEC | 403<br>TRANS | 404<br>SEL |

FIG. 4

510

| 501<br>MEAS | 502<br>DEC | 503<br>TRANS | 504<br>SEL | 530<br>TX | 540<br>MAP |

FIG. 5

FIG. 6

FIG. 7

FIG. 8

FIG. 9

QQ421

QQ450

QQ420

QQ410

QQ412c

QQ413c

QQ411

QQ414

QQ430

QQ422

QQ415

QQ412b

QQ413b

QQ413a

QQ491

QQ492

QQ412a

FIG. 10

QQ510 **Host computer**

QQ511
**SW**

QQ512
Host application

QQ515
**HW**

QQ516
Communication interface

QQ518
Processing circuitry

QQ560

QQ520 **Base station**

QQ521
**SW**

QQ525
**HW**

QQ526
Communication interface

QQ527
Radio interface

QQ528
Processing circuitry

QQ570

QQ530 **UE**

QQ531
**SW**

QQ532
Client application

QQ535
**HW**

QQ537
Radio interface

QQ538
Processing circuitry

QQ550

QQ500

# FIG. 11

BEGIN

QQ610
Host computer provides
user data

QQ611
Host
computer
executes
host
application

QQ620
Host computer initiates
transmission carrying
the user data to the UE

QQ630
Base station transmits
the user data

QQ640
UE executes client
application

END

FIG. 12

BEGIN

QQ810
UE receives input data
provided at host
computer

QQ811
UE executes
client
application

QQ820
UE provides user data

QQ821
UE executes
client
application

QQ830
UE initiates
transmission of the user
data to the host
computer

QQ840
Host computer receives
user data transmitted
from the UE

END

FIG. 14

BEGIN

QQ710
Host computer provides
user data

QQ720
Host computer initiates
transmission carrying
the user data to the UE

QQ730
UE receives the user
data

END

FIG. 13

BEGIN

QQ910
Base station receives
user data from UE

QQ920
Base station initiates
transmission of user
data to the host
computer

QQ930
Host computer receives
the user data

END

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190230706 A1
- US 20190021092 A1